# EUROPEAN PATENT SPECIFICATION

(11) **EP 3 038 946 B1**
(45) Date of publication and mention of the grant of the patent: **26.12.2018**
(21) Application number: 14777840.1
(22) Date of filing: 19.08.2014
(51) Int. Cl.: B65D 81/34, B65D 81/36, B65D 5/20, A21B 3/13

(54) **BAKING MOULD FOR FOODSTUFF, PARTICULARLY FOR CONFECTIONERIES**
BACKFORM FÜR LEBENSMITTEL, INSBESONDERE FÜR BACKWAREN
MOULE DE CUISSON POUR ALIMENTS, EN PARTICULIER POUR DES PÂTISSERIES

(30) Priority: 30.08.2013 IT MI20130299
(43) Date of publication of application: 06.07.2016
(73) Proprietor: Novacart S.P.A., 23846 Garbagnate Monastero (Lecco) (IT)
(72) Inventor: ANGHILERI, Gianmario, I-23864 Malgrate (LC) (IT)
(74) Representative: Ponzellini, Gianmarco
(86) International application number: PCT/IB2014/063965
(87) International publication number: WO 2015/028917

(56) References cited:
- GB-A- 2 221 144
- JP-A- S5 684 238
- US-A- 2 407 118
- US-A- 3 423 008
- US-A- 4 026 458
- US-A1- 2009 321 454
- US-B1- 6 193 831
- US-B1- 6 237 845
- Anonymous: "Corrugated fiberboard - Wikipedia, the free encyclopedia", , 24 July 2013 (2013-07-24), XP055153294, Retrieved from the Internet: URL:http://web.archive.org/web/20130724110 223/http://en.wikipedia.org/wiki/Corrugate d_fiberboard [retrieved on 2014-11-17]

## Description

The present invention refers to a mould for baking foodstuff, particularly confectioneries. The present invention particularly refers to moulds for baking confectioneries of medium/large size such as panettonis, pies and similar.

Baking moulds for confectioneries, for example panettonis, are known. The known moulds comprise a base, usually of a circular shape, and a lateral wall. The base and the lateral wall are separately manufactured and are successively assembled. The step of assembling the base and the lateral wall of the mould has the object of making them integrally to each other in order to form a cavity suitable for housing the dough to be baked. The step of assembling the lateral wall and the base usually provides a step of pasting a portion of the lateral wall to the base; such pasting step is perimetrally made with respect to the base and at the lower portion of the base. The lateral wall, in order to be pasted to the base of the mould, is usually at least partially folded at the lower perimetral portion of the base. The portion of the lateral wall pasted to the lower portion of the base usually takes the shape of a circular crown perimetrally placed with respect to the base of the mould.

However, the known moulds have some drawbacks, such as the duration and complexity of the process for manufacturing the mould. Further drawbacks can occur when the paste is not correctly spread at the mould surfaces to be pasted which, being placed at the perimetral lower portion of the base of the mould, must be suitably pasted for ensuring a correct operation of the same baking mould. For example, when the base is not correctly pasted to the lateral wall of the mould, the dough, which upon its introduction into the mould is usually at a liquid state, could leak out of the mould itself. A suboptimal pasting of the surfaces of the mould at the lower portion of the base could further create problems during the handling and/or transport of the foodstuff in a step after its baking. Further problems can occur when the paste is not homogeneously spread at the mould surfaces to be pasted. For example, a disuniform distribution of the paste can negatively affect the heat transmission at the lower perimetral portion of the mould base, and could cause problems of inhomogeneous baking the foodstuff inside the mould. A further drawback consists of the fact that the conventional moulds cannot be reused because they are cut and/or torn during the operations preliminary to the consumption of the foodstuff received therein, so that it is prevented a subsequent use thereof.

A main object of the present invention consists of solving one or more of the problems of the prior art. *Document* US 6,193,831 *discloses a coated sheet material useful in forming food wrappers and ovenable containers, comprising several layers: a release layer preventing food from sticking, a barrier layer resistant to water and greases, a porous substrate conferring strength and stability and a shielding layer protecting the substrate from oven heat during cooking. Document* US 2,407,118 *discloses a shallow baking plate of paper material obtained by folding a sheet-like cellulosic blank along a plurality of lines to form a hexagonal flat bottom panel, upwardly sloping side walls constituted of a plurality of plane side panels and a circular flat marginal flange having a hexagonal inner edge. Document* JP S56-84238 *discloses a deep paper container with waterproof capabilities formed from a shaped blank folded along numerous ruled lines.*

An object of the present invention consists of simplifying the process for manufacturing a mould for baking foodstuff, particularly confectioneries. A further object of the present invention consists of providing a baking mould for foodstuff being simple and economic to be manufactured. It is an object of the present invention to propose a mould provided with a greater stiffness at the lateral wall.

Further, it is an object of the present invention to provide a mould capable of making more homogeneous the baking of the foodstuff, particularly at the base of the mould.

These objects and other, which will be better understood in the following description, are substantially met by a baking mould for foodstuff according to what has been expressed in one or more of the attached claims, considered alone or in combination with each other or in combination with anyone of the attached claims and/or in combination with anyone of the further characteristics described in the following.

In the following, it is given in an exemplifying and non limiting way, the detailed description of one or more preferred embodiments of the invention, wherein:
Figure 1 represents an axonometric view of a mould according to the present invention;
Figure 2 represents a lateral view of the mould in Figure 1;
Figure 3 represents a cross-section of the mould in Figure 2 along the plane III-III;
Figure 4 represents a detail of the end portion of the lateral wall of a mould according to the present invention;
Figure 5 represents a detail of the end portion of the lateral wall of a mould according to the present invention, wherein the embossing is visible;
Figure 6 represents a mould according to the present invention in a complete opened condition;

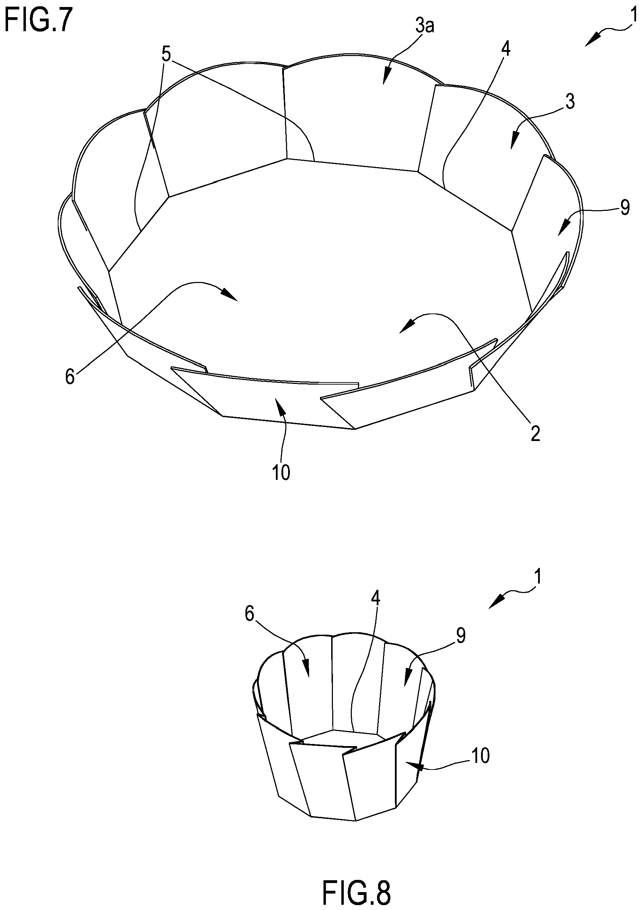

Figure 7 represents a medium/large sized mould according to the present invention;
Figure 8 represents a medium sized mould according to the present invention;

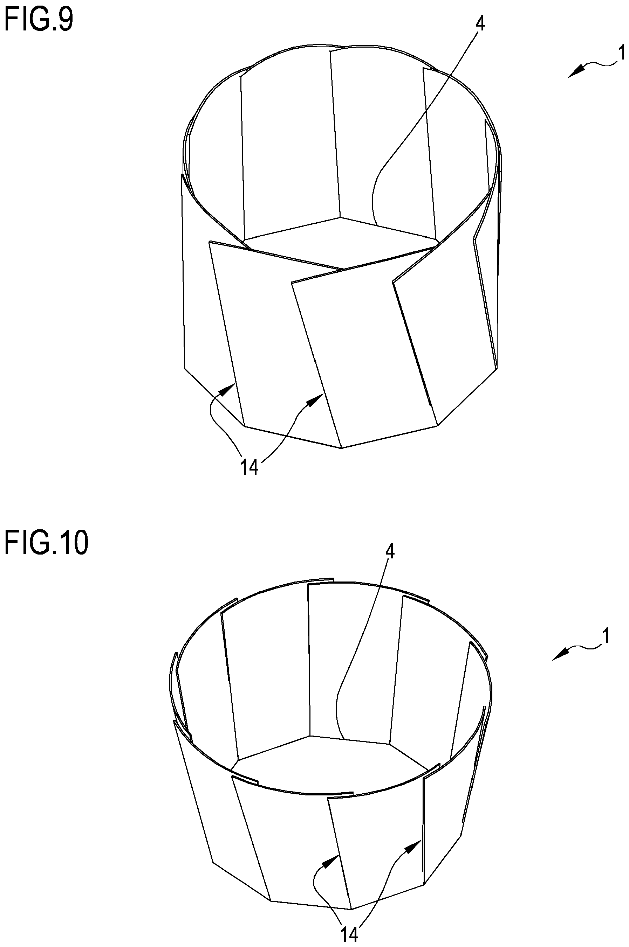

Figure 9 represents a mould according to an embodiment variant of the present invention;
Figure 10 represents a mould according to a further embodiment variant of the present invention;
Figure 11 represents a mould according to an embodiment of the present invention;
Figure 12 represents a lateral cross-section of the mould in Figure 11;
Figure 13 represents a mould according to a further embodiment of the present invention;
Figure 14 represents a lateral cross-section of the mould in Figure 13;
Figure 15 represents an image of a mould according to the present invention;
Figure 16 is the detailed image of a mould according to the present invention, where the embossing is visible.

With reference to the figures, 1 generally indicates a baking mould for foodstuff, particularly for medium-large sized confectioneries such as panettonis, pies and similar. The mould 1 is of the one-piece type and can be made of paper material, particularly by die-cutting a sheet of paper material, which can consists of one or more layers.

The mould 1 comprises a bottom wall 2 and a lateral wall 3, which, being of a one-piece type, are bonded without interruption.

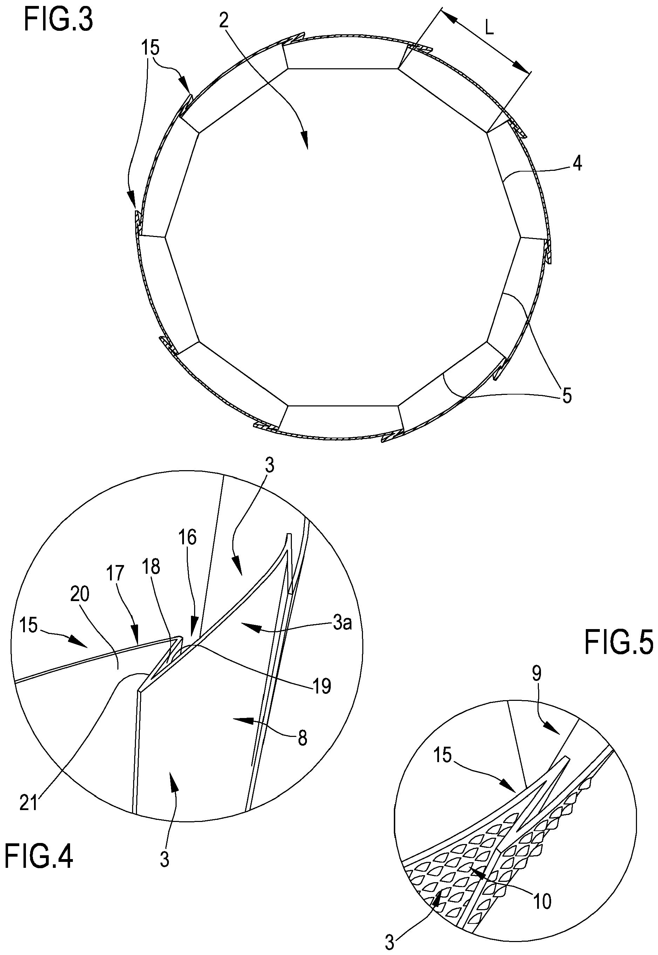

The bottom wall 2 represents the base portion of the mould 1 and can be characterized by a polygonal perimeter 4, as illustrated for example in Figure 3. The polygonal perimeter 4 can comprise one or more sides 5; particularly the polygonal perimeter 4 comprises a number of sides 5 comprised between 6 and 14. Preferably, the number of sides 5 of the polygonal perimeter 4 is comprised between 8 and 12; particularly the number of sides 5 can be equal to 10.

The polygonal perimeter 4 of the bottom wall 2 further defines the region at which the bottom wall 2 is bonded without interruption to the lateral wall 3.

One or more sides 5 forming the perimeter of the bottom wall 2 can develop for a length L; particularly each side 5 develops for the same length L.

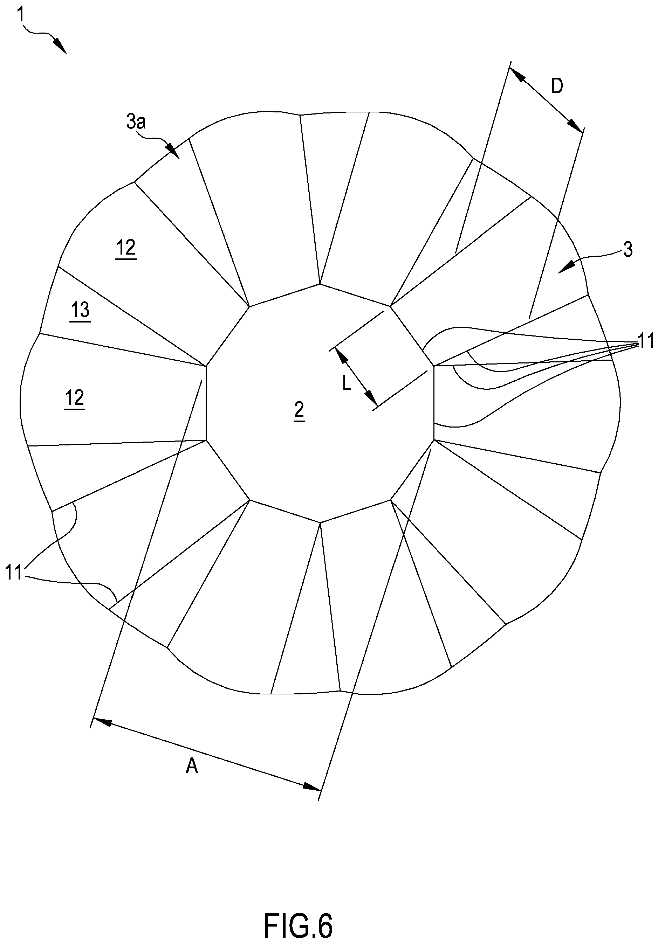

Preferably, the geometrical shape characterizing the polygonal perimeter 4 of the bottom wall 2 of the mould 1 can be formed by a regular type polygon. In Figure 3 and in Figure 6 a mould 1 having a bottom wall 2 characterized by a regular polygonal perimeter 4 is shown, wherein the regular polygon is a decagon.

The polygonal perimeter 4 can have a distance A between two non consecutive vertexes, which can be defined by a diagonal joining the two non consecutive vertexes. Preferably, the two vertexes between which the distance A can be calculated, can be opposite, particularly opposite to the centroid of the polygon defining the polygonal perimeter 4 of the bottom wall 2. Particularly, with reference to two opposite vertexes of the polygonal perimeter 4, the mould 1 can comprise a maximum distance A not less than 10 cm or 15 cm or 18 cm.

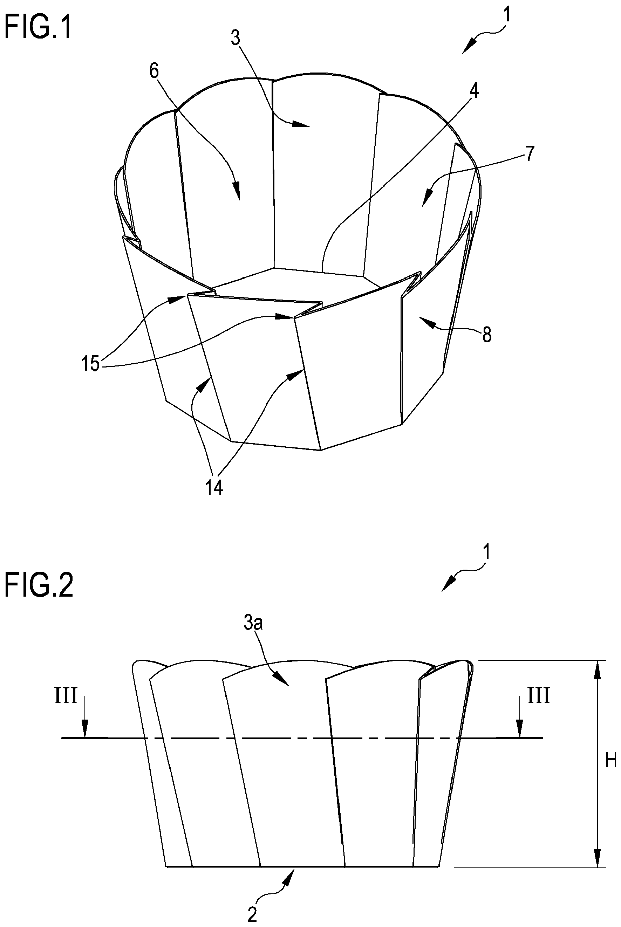

Further, the mould 1 can be characterized by a height H, calculated as a distance between the bottom wall 2 and an upper end of the lateral wall 3. The height H is for example illustrated in Figures 2, 12 and 14 and can be calculated orthogonally to the bottom wall 2. The height H can be of at least 3 cm or 7 cm or 11 cm.

Particularly, a mould 1 according to the present invention can be characterized by a ratio of the height H to the maximum distance A at least equal to 0.15 or 0.6 or 0.7.

The lateral wall 3 can perimetrally develop with respect to the bottom wall 2; under operative conditions of the mould 1 the lateral wall 3 and the bottom wall 2 can be reciprocally oriented and/or positioned in order to define a cavity 6. Particularly, under operative conditions of the mould 1 the lateral wall 3 can emerge away from the bottom wall 2, defining a cavity 6 delimited below by the bottom wall 2 and laterally by the lateral wall 3. In the context of the present description, the term operative conditions of the mould 1 means the condition wherein the mould 1 takes a shape suitable for receiving a dough to be baked; a mould 1, under operative conditions, is for example illustrated in Figure 1. In other words, the operative conditions of a mould 1 correspond to the normal conditions of operation of a baking mould for foodstuff.

The lateral wall 3 can have an end portion 3a, which can perimetrally develop with respect to the lateral wall 3 and is preferably characterized by a geometrical outline at least partially curvilinear and/or rectilinear. Particularly, the geometrical outline of the end portion 3a of the lateral wall 3 can be of a mixed type; in other words, such geometrical outline can be formed by at least partially rectilinear portions and by at least partially curvilinear portions. Figure 1 illustrates for example a mould 1 wherein the end portion 3a of the lateral wall 3 has a mixed geometrical outline. Particularly, the end portion 3a of the lateral wall 3 can have a regular alternation between one or more rectilinear portions and one or more curvilinear portions. Alternatively, the geometrical outline of the end portion 3a can be defined only by rectilinear portions.

In the scope of the manufacturing process of the mould 1, it can be made by die-cutting a sheet of paper material; the geometrical outline of the end portion 3a of the lateral wall 3 of the mould 1 can be therefore defined by the sharp outline of the hollow punch used for cutting. Following the die-cutting operation, the mould 1 can take a complete opened condition, in which the lateral wall 3 of the mould 1 lies substantially on the same plane of the bottom 2 of the mould 1, as illustrated in Figure 6, wherein the geometrical outline of the end portion 3a made by die-cutting is also visible. In other words, Figure 6 illustrates a flat blank made of paper material.

The mould 1 can have an inner surface 7 and an outer surface 8, which can be defined, particularly with reference to the operative conditions of the mould 1, by one or more layers of paper material which the mould 1 is made by. The inner surface 7 and the outer surface 8 develop at the bottom wall 2 and at the lateral wall 3 and are reciprocally opposed with reference to the body of the mould 1. With reference to the operative conditions of the mould 1, the inner surface 7 is the surface of the mould 1 facing the cavity 6 of the mould 1, while the outer surface 8 is opposite to the inner surface 7 with reference to the body of the mould 1. In other words, with reference to the operative conditions of the mould 1, the inner surface 7 represents the surface of the mould 1 suitable for contacting the dough of the foodstuff to be baked, while the outer surface 8 of the mould 1 represents the surface by which the operators and/or the automatic machines contact the mould 1 upon handling and/or moving the mould 1 and/or of the foodstuff received inside the mould 1.

Particularly, at least one between the inner surface 7 and the outer surface 8, preferably at least the inner surface 7, can be coated by a film of oil-repellent and/or water-repellent material; such coating can be polyethylene-based, for example.

The paper material which is preferably made of the mould 1 can consist in a single layer or in a first and in a second layers 9, 10.

Preferably, the paper material has a grammage at least equal to or greater than 125 g/m², particularly at least equal to, or greater than 175 g/m². The grammage is less than 200 g/m², preferably about 150 g/m².

The layers forming the paper material can be smooth and/or embossed and/or corrugated. In the context of the present description, the term smooth layer means a layer devoid of surface roughness obtained by specific processings, for example a smooth layer is neither embossed nor corrugated. A smooth layer of paper material can be particularly coated by a film of oil-repellent and/or water-repellent material; such coat can be for example polyethylene-based.

The paper material formed by a single layer can be coated by a film of oil-repellent and/or water-repellent material, for example polyethylene-based. The single layer of paper material is preferably smooth., under operative conditions of a mould 1 of paper material comprising a single layer, the single layer of paper material can define the inner surface 7 and the outer surface 8 of the mould 1. The inner surface 7 and the outer surface 8 of the mould 1 made of paper material comprising a single layer, can be smooth and particularly both are coated by a film of oil-repellent and/or water-repellent material; such layer can be for example polyethylene-based.

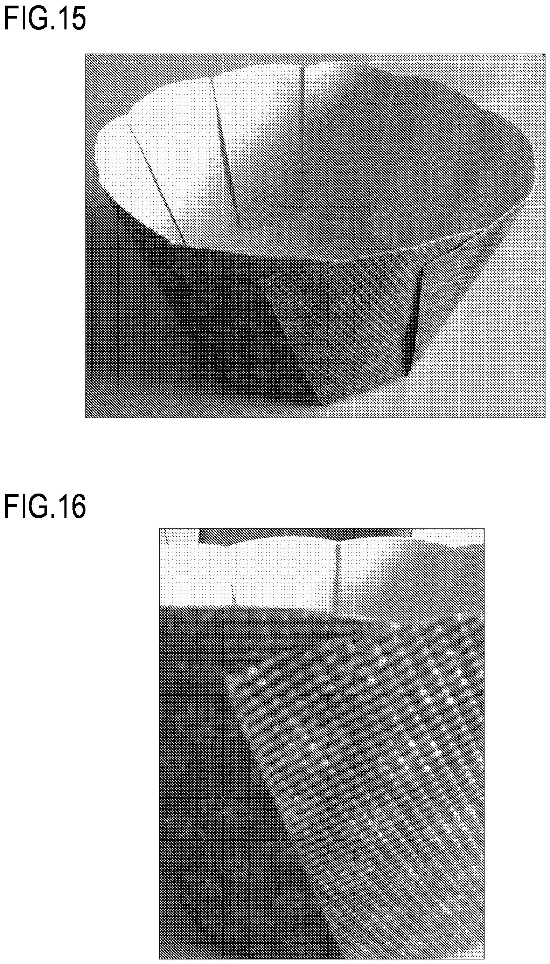

With reference to a mould 1 made of paper material consisting of a first and second layers 9, 10, the first layer 9 defines the inner surface 7 of the mould 1, and the second layer 10 defines the outer surface 8 of the mould 1. The first layer 9 can be smooth; preferably, the first layer 9 is coated by a film of oil-repellent and/or water-repellent material, for example polyethylene-based. With reference to the second layer 10, it is embossed and/or corrugated. Particularly, the second layer 10 can be embossed according to a first series of embossing lines parallel to each other and a second series of embossing lines parallel to each other. Preferably, the first and second series of embossing lines are reciprocally transversal, particularly perpendicular. Specifically, the second layer 10 can be homogeneously embossed at the outer surface 8 of the lateral wall 3 of the mould 1. Alternatively, the second layer 10 can be differently embossed at the outer surface 8 of the lateral wall 3. The homogeneous and/or differential embossing of the second layer 10 at the outer surface 8 of the lateral wall 3 can be made for optimizing the heat transmission at the outer surface 8 of the mould 1. A detail of the outer surface 8 of a mould 1 wherein the second layer 10 is embossed is shown in Figure 5 and in the detailed image of the mould 1 in Figure 16.

The baking mould 1 for foodstuff can be further subjected to one or more creasing steps in order to compress and/or yield the paper material of the mould 1 in order to facilitate its folding. The term folding of the mould 1 means the operations consisting of folding the lateral wall 3 with respect to the bottom wall 2 of the mould 1 and/or reciprocally folding portions of the lateral wall 3.

The creasing step can be made simultaneously with the die-cutting by means of suitable die-cutters or after the die-cutting. The creasing can be performed on the mould 1 at the lateral wall 3 of the mould 1 and/or of the bottom wall 2. The creasing compresses and/or yields the paper material which the mould 1 is made of, by obtaining on it one or more creasing lines 11, usually a plurality of creasing lines 11. Folding the mould 1, particularly at its lateral wall 3, is usually performed at the creasing lines 11.

The creasing lines 11 can be made on the mould 1 in order to define the polygonal perimeter 4 of the bottom wall 2, as for example shown in Figure 6.

With reference to the creasing lines 11 developing at the lateral wall 3, they can develop from the vertexes of the polygonal perimeter 4 characterizing the bottom wall 2. The creasing lines 11 developing from the vertexes of the polygonal perimeter 4 of the bottom wall 2 can define at the lateral wall 3 one or more sectors 12, particularly a plurality of sectors 12 and one or more substantially triangular portions 13, particularly a plurality of substantially triangular portions 13. Preferably, at least one creasing line 11 at the lateral wall 3 of the mould 1 develops from one or more vertexes of the polygonal perimeter 4 of the bottom wall 2. Particularly, at least one creasing line 11 at the lateral wall 3 of the mould 1 can develop from each vertex of the polygonal perimeter 4 of the bottom wall 2; preferably two creasing lines 11 at the lateral wall 3 of the mould 1 develop from each vertex of the polygonal perimeter 4 of the bottom wall.

Generally, at least four creasing lines 11 can develop from at least one vertex, particularly from each vertex, of the polygonal perimeter 4 of the bottom wall 2, as illustrated in Figure 6; two creasing lines 11 can develop at the lateral wall 3 and the other two creasing lines 11 can develop at the bottom wall 2. The two creasing lines 11 developing from one same vertex at the bottom wall 2 can define two sides 5 of the polygonal perimeter 4 of the bottom wall 2.

Each pair of creasing lines 11 developing at the lateral wall 3 from a same vertex of the polygonal perimeter 4 can extend until they join the geometrical outline of the end portion 3a of the lateral wall 3, defining a substantially triangular portion 13. The development of two creasing lines 11 at the lateral wall 3 from the same vertex of the polygonal perimeter 4 can therefore define a substantially triangular portion, which develops along the lateral wall 3 between the two creasing lines 11. Preferably, the two creasing lines 11 reciprocally develop away from a same vertex. The substantially triangular portion 13 can develop at the inner surface 7 and the outer surface 8 of the lateral wall 3. The substantially triangular portion 13 is defined laterally by two creasing lines 11 developing at the lateral wall 3 from a same vertex and above by the geometrical outline of the end portion 3a of the lateral wall 3. Particularly, the shortest side of the substantially triangular portion 13 can be defined at the geometrical outline of the end portion 3a of the lateral wall and can define above the substantially triangular portion 13. The shortest side of the triangle characterizing the substantially triangular portion 13 can be at least partially rectilinear in case, at the substantially triangular portion 13, the geometrical outline of the end portion 3a of the lateral wall 3 is of a rectilinear and/or polygonal type or can be at least partially curvilinear in case, at the substantially triangular portion 13, the geometrical outline of the end portion 3a of the lateral wall 3 is of a curvilinear type. Preferably, the shortest side of the triangle characterizing the substantially triangular portion 13 is substantially rectilinear.

Further, the lateral wall 3 can be geometrically subdivided into more sectors 12 by the creasing lines 11 developing from two adjacent vertexes. The term adjacent vertex means particularly the vertexes lying on a same side 5, which are spaced by a length L from the side 5.

Each sector 12 of the lateral wall 3 can have a shape defined by four sides, which can be rectilinear and/or curvilinear. Particularly, each sector 12 of the lateral wall 3 can be perimetrally determined by a creasing line 11 defining a side 5 of the polygonal perimeter 4 of the bottom wall 2, by two creasing lines 11 which extend at the lateral wall 3, respectively developing from said two adjacent vertexes of a side 5 of the polygonal perimeter 4 of the bottom wall 2, and by a portion of the geometrical outline of the end portion 3a of the lateral wall 3 defined by the two creasing lines 11.

Preferably, the lateral wall 3 can be characterized by a regular alternation of a sector 12 and a substantially triangular portion 13; in other words, each substantially triangular portion 13 can be interposed between two sectors 12 and viceversa, as shown in Figure 6.

The creasing lines 11 developing at the lateral wall 3 of the mould 1 from two adjacent vertexes, can be spaced by a distance D. The distance D defines the width of each sector 12 and can vary along the lateral wall 3, particularly along a direction substantially parallel to the development direction of one or more creasing lines 11 defining the sectors 12 at the lateral wall 3, as shown in Figure 6. In other words, the distance D can vary, preferably increasing along the development of each sector 12 of the lateral wall 3, from the polygonal perimeter 4 of the bottom wall 2 and continuing towards the end portion 3a of the lateral wall 3. The distance D between the creasing lines 11 defining each sector 12 can be calculated for each sector 12 parallelly to the development direction of the side 5 of the polygonal perimeter 4 defining the sector 12 at the bottom wall 2. At the polygonal perimeter 4 of the bottom wall 2, the distance D can be for example calculated as the distance between two creasing lines 11 respectively developing from two adjacent vertexes of a same side 5 of the polygonal perimeter 4 of the bottom wall 2. In other terms, at the polygonal perimeter 4 of the bottom wall 2, the distance D can substantially coincide with the length L of the sides 5 of the polygonal perimeter 4 of the bottom wall 2. Particularly, the minimum distance D between two adjacent creasing lines 11 can be defined at the polygonal perimeter 4 and can be equal to the length L of the sides 5.

With reference to the folding of the lateral wall 3 of the mould 1, the sectors 12 and the substantially triangular portions 13 of the lateral wall 3 can be reciprocally oriented and/or positioned. Folding the mould 1 is preferably executed during the steps of drawing a flat blank of paper material or in a successive step with respect to it. With reference to the drawing, it has substantially the function of orienting the lateral wall 3 with respect to the bottom wall 2 by folding the mould 1 at the polygonal perimeter 4 of the bottom wall 2.

Following the die-cutting and the creasing steps, the mould 1 can substantially take a completely opened condition, in which the mould 1 is substantially flat, as shown in Figure 6. In order to correctly orienting the lateral wall 3 with respect to the bottom wall 2, a mould 1 drawing and/or folding step is provided, by which the lateral wall 3 is caused to emerge from the bottom wall 2. In other words, the drawing and/or folding steps orient the lateral wall 3 with respect to the bottom wall 2 by suitably folding the paper material which the mould 1 is made of at the creasing lines 11. The drawing and/or folding steps can be executed from a flat blank of paper material, as the one shown in Figure 6. Particularly, the mould 1 can be folded along the creasing lines 11 defining the polygonal perimeter 4 of the bottom wall 2 in order to cause the lateral wall 3 of the mould 1 to emerge away from the bottom wall 2. By folding the lateral wall 3 with respect to the bottom wall 2, the lateral wall 3 is suitably oriented with respect to the bottom wall 2 and the mould 1 cavity 6 is formed.

Drawing the flat blank of paper material forms pleats 14 at the lateral wall 3 of the mould 1. The pleats 14 can be substantially uniform along all the development of the lateral wall 3; the function of the pleats 14 consists of compensating the surplus of material at the lateral wall 3 caused by the flat blank drawing.

Each pleat 14 can comprise a lap region 15; the number of the lap regions 15 can be particularly equal to the number of sides 5 of the polygonal perimeter 4 of the bottom wall 2. Particularly, the number of lap regions 15 can be comprised between 6 and 14 and/or between 8 and 12; preferably, the number of lap regions 15 is equal to 10.

Each lap region 15 can comprise a first and second overlapping regions 16, 17. The first overlapping region 16 comprises at least a first and a second portions 18, 19 of the inner surface 7 of the lateral wall 3, which can substantially face each other. Preferably, the first portion 18 of the inner surface 7 of the lateral wall 3 of the mould 1 is defined at a substantially triangular portion 13 and the second portion 19 of the inner surface 7 of the lateral wall 3 of the mould 1 is defined at a sector 12 adjacent to the substantially triangular portion 13, as illustrated in Figure 4.

The second overlapping region 17 comprises at least a first and a second portions 20, 21 of the outer surface 8 of the lateral wall 3, which can substantially face each other. Preferably, the first portion 20 of the outer surface 8 of the lateral wall 3 of the mould 1 is defined at a sector 12 adjacent the substantially triangular portion 13 and the second portion 21 of the outer surface 8 of the lateral wall 3 of the mould 1 is defined at a substantially triangular portion 13, as shown in Figure 4.

At each lap region 15, particularly at the first and the second overlapping regions 16, 17, two sectors 12 can be al least partially overlapped; such overlapping can refer also to the substantially triangular portion 13 interposed between the two sectors 12. Such overlapping can be executed so that the first and/or the second series of embossing lines of one of the at least partially overlapped sectors 12 can be parallel and/or transversal, particularly normal, to the first and/or to the second series of embossing lines of the other sector 12.

In order to explain how the steps of folding the lateral wall 3 of the mould 1 are executed, it will be made reference to a single pleat 14 and to the relative lap region 15.

The operation of folding the lateral wall 3 at a lap region 15 occurs substantially by a rotation of the substantially triangular portion 13 with respect to two sectors 12 adjacent thereto; at the end of the rotation, the substantially triangular portion 13 faces and/or abuts against the two adjacent sectors 12 at the first and the second overlapping regions 16, 17. The substantially triangular portion 13 rotation can be executed by moving at least one of the two sectors 12 adjacent thereto, particularly both. The movement of at least one of the two sectors 12 and/or of the substantially triangular portion 13 can be for example automatically executed by the drawing operation.

At the first overlapping region 16, following said rotation and/or movement, the first portion 18 of the inner surface 7 of the lateral wall 3 can be frontally positioned with respect to and/or can abut against the second portion 19 of the inner surface 7 of the lateral wall 3, and the first portion 20 of the outer surface 8 of the lateral wall 3 can be frontally positioned with respect to and/or can abut against the second portion 21 of the outer surface 8 of the lateral wall 3.

A detail of the lateral wall 3 of a mould 1 in a step following the folding one is for example illustrated in Figure 4, wherein at the first overlapping region 16 the first portion 18 of the inner surface 7 of the lateral wall 3 is frontally positioned with respect to and faces the second portion 19 of the inner surface 7 of the lateral wall 3, and at the second overlapping region 17 the first portion 20 of the outer surface 8 of the lateral wall 3 is frontally positioned with respect to and faces the second portion 21 of the outer surface 8 of the lateral wall 3.

Upon the movement of one or more substantially triangular portions 13 and/or of one or more sectors 12, the axis which the one or more substantially triangular portions 13 and/or one or more sectors 12 rotate around, can be for example defined by a creasing line 11 laterally delimiting a substantially triangular portion 13. The previously described reciprocal positioning of a substantially triangular portion 13 with respect to the two adjacent sectors 12 at each lap region 15 can also consist of translational movements; in other words such positioning cannot be executed by a simple rotation of the substantially triangular portion 13 with respect to at least one adjacent sector 12 or viceversa, but can also comprise one or more translations. Particularly, the reciprocal positioning and/or movement of a substantially triangular portion 13 with respect to the two adjacent sectors 12 at one lap region 15 can be executed by one or more rotations and/or translational and/or rototranslational movements, which can involve also at least one of the two sectors 12 adjacent to the substantially triangular portion 13.

The reciprocal positioning of a substantially triangular portion 13 and of the two adjacent sectors 12 can define the outline of the pleat 14; the pleats 14 can have a substantially "Z" outline, which can be visible according to an axonometric view, as illustrated in Figure 1, or also according to a cross-section, as illustrated in Figure 3.

After the folding, the first portion 18 of the inner surface 7 of the lateral wall 3 and/or the second portion 19 of the inner surface 7 of the lateral wall 3 and/or the first portion 20 of the outer surface 8 of the lateral wall 3 and/or the second portion 21 of the outer surface 8 of the lateral wall 3 can be reciprocally constrained and/or fixed.

Particularly, with reference to the first overlapping region 16, the first portion 18 of the inner surface 7 of the lateral wall 3 can be pasted and/or heat-sealed to the second portion 19 of the inner surface 7 of the lateral wall 3, or viceversa. Preferably, a paste layer can be applied at the first portion 18 of the inner surface 7 of the lateral wall 3 and/or at the second portion 19 of the inner surface 7 of the lateral wall 3.

Particularly, with reference to the second overlapping region 17, the first portion 20 of the outer surface 8 of the lateral wall 3 can be pasted and/or heat-sealed to the second portion 21 of the outer surface 8 of the lateral wall 3. Preferably, a paste layer can be applied at the first portion 20 of the outer surface 8 of the lateral wall 3 and/or at the second portion 21 of the outer surface 8 of the lateral wall 3.

With reference to the arrangement of the lap regions 15, they can be arranged according to an uniform trend along the lateral wall 3; particularly, the lap regions 15 can be equally spaced from each other.

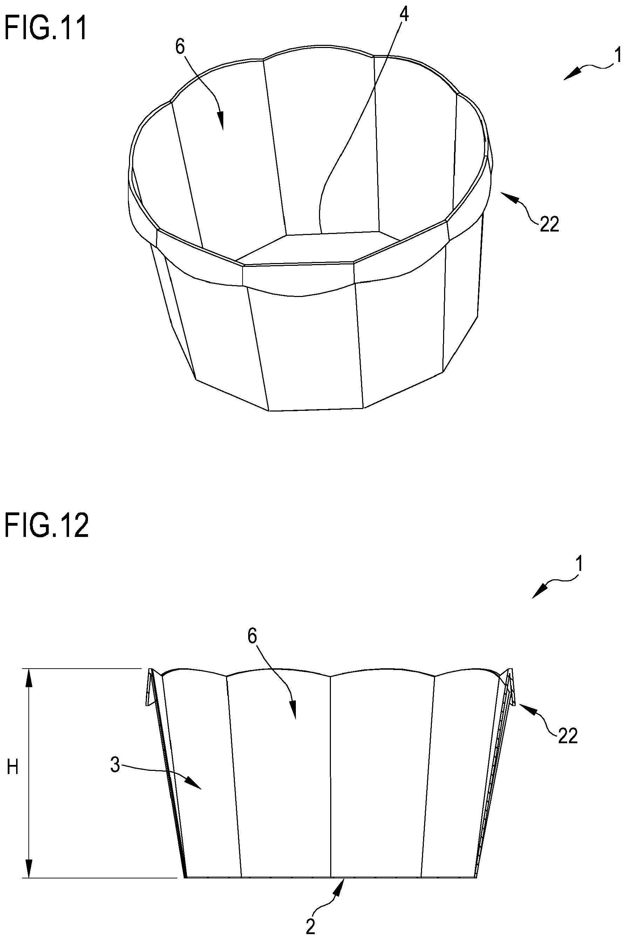

According to an embodiment of the present invention, the end portion 3a of the lateral wall 3 can be folded outwards from the cavity 6 in order to form a lapped edge 22. A mould 1 comprising a lapped edge 22 obtained by folding the end portion 3a of the lateral wall 3 is for example illustrated in Figure 11 and in Figure 12. The lapped edge 22 can perimetrally develop with respect to the cavity 6, as shown in Figure 11. Preferably, in order to form the lapped edge 22, the end portion 3a of the lateral wall 3 is folded outwards from the cavity 6 and away from it, in order to form with the outer surface 8 of the mould 1 at the end portion 3a of the lateral wall 3, a substantially acute angle, as illustrated in Figure 12. The substantially acute angle preferably takes a value less than 25°; particularly the lapped edge 22 can contact the outer surface 8 of the mould 1. The edge 22 can be fixed, particularly by pasting and/or heat-sealing, to the outer surface 8 of the mould 1 at the end portion 3a of the lateral wall 3. Particularly, a paste layer can be applied at the outer surface 8 of the end portion 3a of the lateral wall 3. Alternatively, in order to form the edge 22, the end portion 3a of the lateral wall 3 can be simply folded outwards from the cavity 6 and away from it without applying a paste layer.

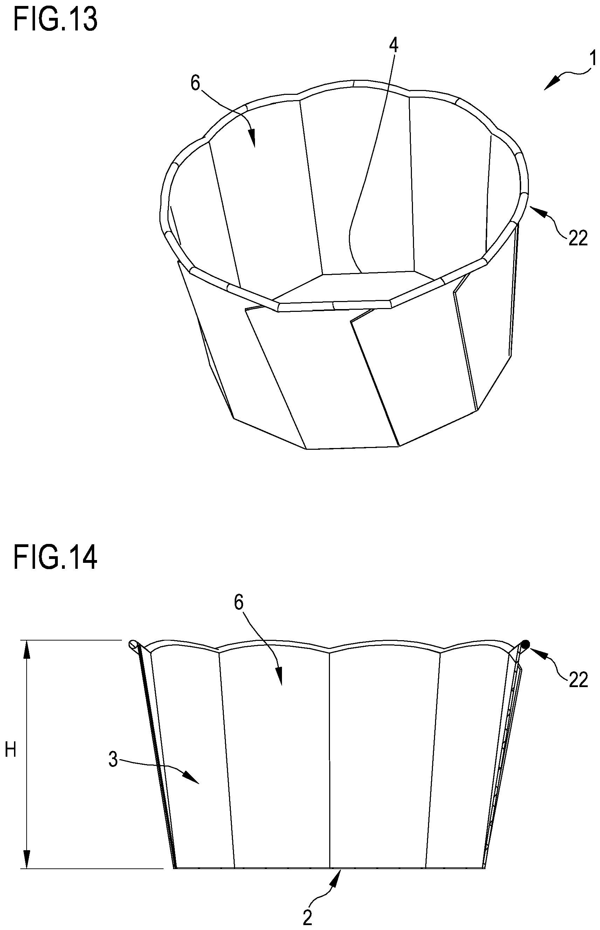

According to another embodiment of the present invention, the end portion 3a of the lateral wall 3 can be at least partially rolled up outwards from the cavity 6 in order to form a curly edge 22; such embodiment is shown in Figure 13 and in Figure 14. At the end portion 3a of the lateral wall 3 designed to be rolled up, a paste layer can be applied, in order to fix and stiffen the edge 22. Alternatively, the curly edge 22 can be simply made by rolling up the end portion 3a of the lateral wall 3 outwards from the cavity 6, without providing any paste application.

The present invention enables to obtain one or more of the following advantages and to solve one or more of the problems found in the prior art. First of all, the baking mould according to the present invention enables to homogeneously bake the foodstuff, particularly at the bottom wall.

Further, a baking mould according to the present invention has a lateral wall provided with a greater stiffness.

A baking mould according to the present invention can be opened in a step after baking the foodstuff contained therein, in order to take a completely or partially opened condition facilitating the cutting operations of the foodstuff contained therein, and further can be reused in subsequent consuming operations of the same foodstuff. The shape of the lateral wall of the mould can further aid in defining the width of the slices which the confectionery product can be subdivided into.

Further, the invention is an user-friendly, easily and economically manufacturable implementation.

## Claims

1. Baking mould (1) for foodstuff, particularly for confectioneries such as panettonis and/or pies, said mould (1) being of a one-piece type and being made of paper material, said paper material being composed of a first layer (9) and a second layer (10), said first layer (9) being coated by a film of oil-repellent and/or water-repellent material, said second layer (10) being embossed and/or corrugated, under operative conditions of said mould (1), said first layer (9) defining an inner surface (7) of said mould (1), said mould (1) comprising a bottom wall (2) having a polygonal perimeter (4) comprising a number of sides (5), said sides (5) of the polygonal perimeter (4) being defined by one or more creasing lines (11) and extending for the same length (L), and a lateral wall (3) perimetrally developing with respect to said bottom wall (2), said bottom wall (2) and said lateral wall (3) being connected without interruption at the polygonal perimeter (4) of said bottom wall (2), under operative conditions of said mould (1), said lateral wall (3) and said bottom wall (2) defining a cavity (6), said cavity (6) being defined below by said bottom wall (2) and laterally by said lateral wall (3), said lateral wall (3) comprising the plurality of creasing lines (11) developing from said bottom wall (2), at least one creasing line (11) developing from one or more vertexes of said polygonal perimeter (4) of said bottom wall (2), said lateral wall (3) having an upper end portion (3a) opposite to the bottom wall (2), said upper end portion (3a) having an at least partially curvilinear geometrical outline or an at least partially rectilinear geometrical outline;
wherein
i) said number of sides (5) is comprised between 6 and 14;
ii) said lateral wall (3) comprises a predetermined number of pleats (14), each pleat (14) comprising a lap region (15) having a first and a second overlapping regions (16, 17), the first overlapping region (16) comprising at least a first and a second portions (18, 19) of the inner surface (7) of said lateral wall (3), the second overlapping region (17) comprising at least a first and a second portions (20, 21) of the outer surface (8) of said lateral wall (3), said pleats (14) having, according to a cross-section, a substantially "Z" outline, said lap regions (15) being placed according to an uniform trend along said lateral wall (3) and being equally spaced from each other, said lateral wall (3) being configured for defining a number of lap regions (15) comprised between 6 and 14, said number of lap regions (15) being equal to said number of sides (5) of the polygonal perimeter (4);
iii) at least two creasing lines (11) develop from each vertex of said polygonal perimeter (4) of said bottom wall (2), said two creasing lines (11) developing from one same vertex extend at said lateral wall (3) reciprocally away until they join said geometrical outline of said upper end portion (3a) of said lateral wall (3), said two creasing lines (11) defining at said first and said second layers (9, 10) of said lateral wall (3) a substantially triangular portion (13), said substantially triangular portion (13) developing between said two creasing lines (11);
iv) two creasing lines (11) developing respectively from two adjacent vertexes of a side (5) of said polygonal perimeter (4) of said bottom wall (2) define a sector (12) at said lateral wall (3), the shape of said sector (12) being defined by four sides; **characterized in that**
v) said second layer (10) defines an outer surface (8) of said mould (1); and **in that**
vi) the grammage of the paper material is less than 200 g/m².

2. Mould (1) according to the preceding claim, wherein said lateral wall (3) is configured for defining a number of lap regions (15) comprised between 8 and 12, particularly equal to 10.

3. Mould (1) according to anyone of the preceding claims, wherein said lateral wall (3) has an upper end portion (3a) opposite to the bottom portion (2) and **characterized by** a geometrical outline only defined by rectilinear portions.

4. Mould (1) according to anyone of the preceding claims, wherein said lateral wall (3) comprises a plurality of creasing lines (11), two adjacent creasing lines (11) of said creasing lines (11) of said lateral wall (3) are reciprocally spaced by a distance (D), said distance (D) being defined parallely to one or more of said sides (5) of said polygonal perimeter (4), said distance (D) being able to vary at said lateral wall (3), said creasing lines (11) of said lateral wall (3) developing from said bottom wall (2) and wherein at least one creasing line (11) develops from one or more vertexes, and particularly from all the vertexes, of said polygonal perimeter (4) of said bottom wall (2).

5. Mould (1) according to claim 3, wherein a layer of paste is applied at said substantially triangular portion (13) of the second layer (10) of said lateral wall (3).

6. Mould (1) according to claim 4 or 5, wherein said lateral wall (3) comprises a predetermined number of pleats (14), each pleat (14) comprising a lap region (15), each lap region (15) being made by reciprocally orienting one or more sectors (12) and one or more substantially triangular portions (13) at one or more creasing lines (11) of said lateral wall (3), wherein in particular a minimum distance (D) is equal to said length (L) of said sides (5) of the polygonal perimeter (4) of said bottom wall (2), particularly said minimum distance (D) is defined at said polygonal perimeter (4).

7. Mould (1) according to anyone of the preceding claims, wherein said mould (1) of the one-piece type is made by drawing a flat blank of paper material, and said sides (5) of the polygonal perimeter (4) are defined by one or more creasing lines (11).

8. Mould (1) according to anyone of the preceding claims, wherein said sides (5) of the polygonal perimeter (4) develop for the same length (L), particularly said polygonal perimeter (4) is regular.

9. Mould (1) according to anyone of the preceding claims, wherein said film of oil-repellent and/or water-repellent materials is polyethylene-based, said first layer (9) being smooth, and wherein said second layer (10) is embossed according to a first series of embossing lines parallel to each other and according to a second series of embossing lines parallel to each other, said first and said second series of embossing lines being reciprocally transversal, particularly perpendicular.

10. Mould (1) according to the preceding claim, wherein two sectors (12) are at least partially overlapped at each lap region (15), said first and said second series of embossing lines of one of said at least partially overlapped sectors (12) being respectively parallel to said first and said second series of embossing lines of the other sector (12).

11. Mould (1) according to anyone of the preceding claims, wherein said lateral wall (3) has an upper end portion (3a) opposite to the bottom wall (2), and wherein said lateral wall (3) is folded outwards from said cavity (6) at said end portion (3a) in order to form a lapped edge (22), said edge (22) being folded downwardly in order to form a substantially acute angle with said lateral wall (3) and perimetrally developing with respect to said cavity (6), particularly said substantially acute angle is less than 25°, still more particularly wherein said edge (22) is in contact with said outer surface (8) of said lateral wall (3), wherein in particular said edge (22) is pasted and/or heat-sealed to said outer surface (8) at said end portion (3a) .

12. Mould (1) according to anyone of claims 1-10, wherein said lateral wall (3) has an upper end portion (3a) opposite to the bottom wall (2) and wherein said end portion (3a) of said lateral wall (3) is at least partially rolled up on itself in order to form a curly edge (22), said edge (22) perimetrally developing with respect to said cavity (6), wherein said edge (22) is pasted and/or heat-sealed to said outer surface (8) at said end portion (3a).

13. Mould (1) according to anyone of the preceding claims, wherein said mould (1) has, under operative conditions, an height (H) of at least 3 cm, preferably of at least 7 cm, and still more preferably an height (H) of at least 11 cm.

14. Mould (1) according to anyone of the preceding claims, wherein said mould (1) has a maximum distance (A) between two non consecutive vertexes, particularly opposite, of said polygonal perimeter (4) not less than 10 cm, particularly not less than 15 cm, and preferably not less than 18 cm.

15. Process for baking confectioneries such as panettonis and/or pies, comprising the step of providing a mould (1) according to anyone of the preceding claims.

## Patentansprüche

1. Backform (1) für Nahrungsmittel, insbesondere für Konditorwaren wie etwa Panettone und/oder Kuchen, wobei die Form (1) von einer einstückigen Art ist und aus einem Papiermaterial hergestellt ist, wobei das Papiermaterial aus einer ersten Schicht (9) und einer zweiten Schicht (10) aufgebaut ist, wobei die erste Schicht (9) mit einem Film aus einem ölabweisenden und/oder wasserabweisenden Material beschichtet ist, wobei die zweite Schicht (10) geprägt und/oder gewellt ist, wobei unter operativen Bedingungen der Form (1) die erste Schicht (9) eine innere Fläche (7) der Form (1) definiert, wobei die Form (1) eine Bodenwand (2), welche einen polygonalen Umfang (4) aufweist, welcher eine Anzahl von Seiten (5) umfasst, wobei die Seiten (5) des polygonalen Umfangs (4) durch eine oder mehrere Faltlinien (11) definiert sind und sich für die gleiche Länge (L) erstrecken, und eine laterale Wand (3) umfasst, welche sich in Bezug auf die Bodenwand (2) umfänglich entfaltet, wobei die Bodenwand (2) und die laterale Wand (3) ohne eine Unterbrechung an dem polygonalen Umfang (4) der Bodenwand (2) verbunden sind, wobei unter operativen Bedingungen der Form (1) die laterale Wand (3) und die Bodenwand (2) einen Hohlraum (6) definieren, wobei der Hohlraum (6) unterhalb durch die Bodenwand (2) und lateral durch die laterale Wand (3) definiert ist, wobei die laterale Wand (3) die Mehrzahl von Faltlinien (11) umfasst, welche sich von der Bodenwand (2) entfalten, wobei sich wenigstens eine Faltlinie (11) von einem oder mehreren Eckpunkten des polygonalen Umfangs (4) der Bodenwand (2) entfaltet, wobei die laterale Wand (3) entgegengesetzt der Bodenwand (2) einen oberen Endabschnitt (3a) aufweist, wobei der obere Endabschnitt (3a) einen wenigstens teilweise krummlinigen geometrischen Umriss oder einen wenigstens teilweise geradlinigen geometrischen Umriss aufweist; wobei
i) die Anzahl von Seiten (5) zwischen 6 und 14 umfasst ist;
ii) die laterale Wand (3) eine vorbestimmte Anzahl von Falten (14) umfasst, wobei jede Falte (14) einen Überlappbereich (15) umfasst, welcher einen ersten und einen zweiten Überlappungsbereich (16, 17) aufweist, wobei der erste Überlappungsbereich (16) wenigstens einen ersten und einen zweiten Abschnitt (18, 19) der inneren Fläche (7) der lateralen Wand (3) umfasst, wobei der zweite Überlappungsbereich (17) wenigstens einen ersten und einen zweiten Abschnitt (20, 21) der äußeren Fläche (8) der lateralen Wand (3) umfasst, wobei die Falten (14) entsprechend einem Querschnitt einen im Wesentlichen "Z"-förmigen Umriss aufweisen, wobei die Überlappbereiche (15) entsprechend einem einheitlichen Verlauf entlang der lateralen Wand (3) platziert sind und gleichmäßig voneinander beabstandet sind, wobei die laterale Wand (3) dazu eingerichtet ist, eine Anzahl von Überlappbereichen (15) zu definieren, welche zwischen 6 und 14 umfasst ist, wobei die Anzahl von Überlappbereichen (15) gleich der Anzahl von Seiten (5) des polygonalen Umfangs (4) ist;
iii) sich wenigstens zwei Faltlinien (11) von jedem Eckpunkt des polygonalen Umfangs (4) der Bodenwand (2) entfalten, wobei sich die zwei Faltlinien (11), welche sich von einem gleichen Eckpunkt entfalten, an der lateralen Wand (3) gegenseitig voneinander weg erstrecken, bis sie den geometrischen Umriss des oberen Endabschnitts (3a) der lateralen Wand (3) verbinden, wobei die zwei Faltlinien (11) an der ersten und der zweiten Schicht (9, 10) der lateralen Wand (3) einen im Wesentlichen dreieckigen Abschnitt (13) definieren, wobei sich der im Wesentlichen dreieckige Abschnitt (13) zwischen den zwei Faltlinien (11) entfaltet;
iv) sich zwei Faltlinien (11), welche sich jeweils von zwei benachbarten Eckpunkten einer Seite (5) des polygonalen Umfangs (4) der Bodenwand (2) entfalten, einen Sektor (12) an der lateralen Wand (3) definieren, wobei die Gestalt des Sektors (12) durch vier Seiten definiert ist; **dadurch gekennzeichnet, dass**
v) die zweite Schicht (10) eine äußere Fläche (8) der Form (1) definiert; und dass
vi) das Flächengewicht des Papiermaterials weniger als 200 g/m² beträgt.

2. Form (1) nach dem vorhergehenden Anspruch, wobei die laterale Wand (3) dazu eingerichtet ist, eine Anzahl von Überlappbereichen (15) zu definieren, welche zwischen 8 und 12 umfasst ist, insbesondere gleich 10 ist.

3. Form (1) nach einem der vorhergehenden Ansprüche, wobei die laterale Wand (3) einen oberen Endabschnitt (3a) aufweist, welcher dem Bodenabschnitt (2) entgegengesetzt ist und durch einen geometrischen Umriss gekennzeichnet ist, welcher nur durch geradlinige Abschnitte definiert ist.

4. Form (1) nach einem der vorhergehenden Ansprüche, wobei die laterale Wand (3) eine Mehrzahl von Faltlinien (11) umfasst, wobei zwei benachbarte Faltlinien (11) der Faltlinien (11) der lateralen Wand (3) um einen Abstand (D) gegenseitig voneinander beabstandet sind, wobei der Abstand (D) parallel zu einer oder mehreren der Seiten (5) des polygonalen Umfangs (4) definiert ist, wobei sich der Abstand (D) an der lateralen Wand (3) ändern kann, wobei sich die Faltlinien (11) der lateralen Wand (3) von der Bodenwand (2) entfalten und wobei sich wenigstens eine Faltlinie (11) von einem oder mehreren Eckpunkten und insbesondere von allen Eckpunkten des polygonalen Umfangs (4) der Bodenwand (2) entfaltet.

5. Form (1) nach Anspruch 3, wobei eine Klebstoffschicht an dem im Wesentlichen dreieckigen Abschnitt (13) der zweiten Schicht (10) der lateralen Wand (3) aufgebracht ist.

6. Form (1) nach Anspruch 4 oder 5, wobei die laterale Wand (3) eine vorbestimmte Anzahl von Falten (14) umfasst, wobei jede Falte (14) einen Überlappbereich (15) umfasst, wobei jeder Überlappbereich (15) durch ein gegenseitiges Ausrichten eines oder mehrerer Sektoren (12) und eines oder mehrerer im Wesentlichen dreieckiger Abschnitte (13) an einer oder mehreren Faltlinien (11) der lateralen Wand (3) hergestellt ist, wobei insbesondere ein minimaler Abstand (D) gleich der Länge (L) der Seiten (5) des polygonalen Umfangs (4) der Bodenwand (2) ist, insbesondere wobei der minimale Abstand (D) an dem polygonalen Umfang (4) definiert ist.

7. Form (1) nach einem der vorhergehenden Ansprüche, wobei die Form (1) der einstückigen Art durch ein Ziehen eines flachen Zuschnitts aus einem Papiermaterial hergestellt ist und die Seiten (5) des polygonalen Umfangs (4) durch eine oder mehrere Faltlinien (11) definiert sind.

8. Form (1) nach einem der vorhergehenden Ansprüche, wobei sich die Seiten (5) des polygonalen Umfangs (4) für die gleiche Länge (L) entfalten, insbesondere wobei der polygonale Umfang (4) regelmäßig ist.

9. Form (1) nach einem der vorhergehenden Ansprüche, wobei der Film aus einem ölabweisenden und/oder einem wasserabweisenden Material auf Polyethylen basiert, wobei die erste Schicht (9) glatt ist, und wobei die zweite Schicht (10) entsprechend einer ersten Reihe von Prägelinien, welche parallel zueinander sind, und entsprechend einer zweiten Reihe von Prägelinien, welche parallel zueinander sind, geprägt ist, wobei die erste und die zweite Reihe von Prägelinien gegenseitig transversal zueinander, insbesondere senkrecht zueinander, sind.

10. Form (1) nach dem vorhergehenden Anspruch, wobei zwei Sektoren (12) wenigstens teilweise an jedem Überlappbereich (15) überlappt sind, wobei die erste und die zweite Reihe von Prägelinien eines der wenigstens teilweise überlappten Sektoren (12) parallel zu der ersten bzw. der zweiten Reihe von Prägelinien des anderen Sektors (12) sind.

11. Form (1) nach einem der vorhergehenden Ansprüche, wobei die laterale Wand (3) entgegengesetzt der Bodenwand (2) einen oberen Endabschnitt (3a) aufweist und wobei die laterale Wand (3) an dem Endabschnitt (3a) von dem Hohlraum (6) nach außen gefaltet ist, um einen umgestülpten Rand (22) zu bilden, wobei der Rand (22) nach unten gefaltet ist, um einen im Wesentlichen spitzen Winkel mit der lateralen Wand (3) zu bilden, und sich in Bezug auf den Hohlraum (6) umfänglich entfaltet, insbesondere wobei der im Wesentlichen spitze Winkel kleiner als 25° ist, noch spezieller wobei der Rand (22) mit der äußeren Fläche (8) der lateralen Wand (3) in Kontakt ist, wobei insbesondere der Rand (22) an dem Endabschnitt (3a) an die äußere Fläche (8) geklebt und/oder heißversiegelt ist.

12. Form (1) nach einem der Ansprüche 1-10, wobei die laterale Wand (3) entgegengesetzt der Bodenwand (2) einen oberen Endabschnitt (3a) aufweist und wobei der obere Endabschnitt (3a) der lateralen Wand (3) wenigstens teilweise an sich selbst aufgerollt ist, um einen gewellten Rand (22) zu bilden, wobei sich der Rand (22) in Bezug auf den Hohlraum (6) umfänglich entfaltet, wobei der Rand (22) an dem Endabschnitt (3a) an die äußere Fläche (8) geklebt und/oder heißversiegelt ist.

13. Form (1) nach einem der vorhergehenden Ansprüche, wobei die Form (1) unter operativen Bedingungen eine Höhe (H) von wenigstens 3 cm, bevorzugt von wenigstens 7 cm, und noch bevorzugter eine Höhe (H) von wenigstens 11 cm aufweist.

14. Form (1) nach einem der vorhergehenden Ansprüche, wobei die Form (1) einen maximalen Abstand (A) zwischen zwei nicht aufeinanderfolgenden Eckpunkten, welche insbesondere entgegengesetzt sind, des polygonalen Umfangs (4) von nicht weniger als 10 cm, insbesondere nicht weniger als 15 cm, und bevorzugt nicht weniger als 18 cm aufweist.

15. Verfahren zum Backen von Konditorwaren wie etwa Panettone und/oder Kuchen, umfassend den Schritt eines Bereitstellens einer Form (1) nach einem der vorhergehenden Ansprüche.

## Revendications

1. Moule de cuisson (1) pour produit alimentaire, particulièrement pour des pâtisseries telles que des panettones et/ou des tartes, ledit moule (1) étant d'un type en une pièce et étant constitué d'un matériau en papier, ledit matériau en papier étant composé d'une première couche (9) et d'une seconde couche (10), ladite première couche (9) étant revêtue d'un film d'une matière oléofuge et/ou hydrofuge, ladite seconde couche (10) étant gaufrée et/ou ondulée, sous des conditions de fonctionnement dudit moule (1), ladite première couche (9) définissant une surface interne (7) dudit moule (1), ledit moule (1) comprenant une paroi inférieure (2) présentant un périmètre polygonal (4) comprenant de nombreux côtés (5), lesdits côtés (5) du périmètre polygonal (4) étant définis par une ou plusieurs lignes de rainurage (11) et s'étendant pour la même longueur (L), et une paroi latérale (3) s'étendant dans le périmètre par rapport à ladite paroi inférieure (2), ladite paroi inférieure (2) et ladite paroi latérale (3) étant reliées sans interruption au niveau du périmètre polygonal (4) de ladite paroi inférieure (2), sous des conditions de fonctionnement dudit moule (1), ladite paroi latérale (3) et ladite paroi inférieure (2) définissant une cavité (6), ladite cavité (6) étant définie en-dessous par ladite paroi inférieure (2) et latéralement par ladite paroi latérale (3), ladite paroi latérale (3) comprenant la pluralité des lignes de rainurage (11) se développant depuis ladite paroi inférieure (2), au moins une ligne de rainurage (11) se développant depuis un ou plusieurs vortex dudit périmètre polygonal (4) de ladite paroi inférieure (2), ladite paroi latérale (3) présentant une partie d'extrémité supérieure (3a) opposée à la paroi inférieure (2), ladite partie d'extrémité supérieure (3a) présentant un contour géométrique au moins partiellement curviligne ou un contour géométrique au moins partiellement rectiligne ;
où
i) ledit nombre de côtés (5) est compris entre 6 et 14 ;
ii) ladite paroi latérale (3) comprenant un nombre prédéterminé de plis (14), chaque pli (14) comprenant une région de recouvrement (15) présentant une première et une seconde région de chevauchement (16, 17), la première région de chevauchement (16) comprenant au moins une première et une seconde partie (18, 19) de la surface interne (7) de ladite paroi latérale (3), la seconde région de chevauchement (17) comprenant au moins une première et une seconde partie (20, 21) de la surface externe (8) de ladite paroi latérale (3), lesdits plis (14) présentant, selon une coupe transversale, un contour sensiblement en « Z », lesdites régions de recouvrement (15) étant placées selon une tendance uniforme le long de ladite paroi latérale (3) et étant également espacées l'une de l'autre, ladite paroi latérale (3) étant configurée pour définir de nombreuses régions de recouvrement (15) comprises entre 6 et 14, ledit nombre de régions de recouvrement (15) étant égal audit nombre de côtés (5) du périmètre polygonal (4) ;
iii) au moins deux lignes de rainurage (11) se développent depuis chaque vortex dudit périmètre polygonal (4) de ladite paroi inférieure (2), lesdites deux lignes de rainurage (11) se développant depuis un même vortex s'étendent au niveau de ladite paroi latérale (3) réciproquement à l'opposé jusqu'à ce qu'elles rejoignent ledit contour géométrique de ladite partie d'extrémité supérieure (3a) de ladite paroi latérale (3), lesdites deux lignes de rainurage (11) définissant au niveau de ladite première et ladite seconde couche (9, 10) de ladite paroi latérale (3) une partie sensiblement triangulaire (13), ladite partie sensiblement triangulaire (13) se développant entre deux lignes de rainurage (11) ;
iv) deux lignes de rainurage (11) se développant respectivement depuis deux vortex adjacents d'un côté (5) dudit périmètre polygonal (4) de ladite paroi inférieure (2) définissant un secteur (12) au niveau de ladite paroi latérale (3), la forme dudit secteur (12) étant définie par quatre côtés ; **caractérisé en ce que**
v) ladite seconde couche (10) définit une surface externe (8) dudit moule (1) ; et **en ce que**
vi) le grammage du matériau en papier est inférieur à 200 g/m².

2. Moule (1) selon la revendication précédente, ladite paroi latérale (3) étant configurée pour définir de nombreuses régions de recouvrement (15) comprises entre 8 et 12, particulièrement égales à 10.

3. Moule (1) selon l'une quelconque des revendications précédentes, ladite paroi latérale (3) présentant une partie d'extrémité supérieure (3a) opposée à la partie inférieure (2) et **caractérisée par** un contour géométrique défini uniquement par des parties rectilignes.

4. Moule (1) selon l'une quelconque des revendications précédentes, dans lequel ladite paroi latérale (3) comprend une pluralité de lignes de rainurage (11), deux lignes de rainurage (11) adjacentes desdites lignes de rainurage (11) de ladite paroi latérale (3) étant réciproquement espacées d'une certaine distance (D), ladite distance (D) étant définie parallèlement à un ou plusieurs desdits côtés (5) dudit périmètre polygonal (4), ladite distance (D) étant capable de varier au niveau de ladite paroi latérale (3), lesdites lignes de rainurage (11) de ladite paroi latérale (3) se développant depuis ladite paroi inférieure (2) et où au moins une ligne de rainurage (11) se développe à partir d'un ou plusieurs vortex, et particulièrement à partir de tous les vortex, dudit périmètre polygonal (4) de ladite paroi inférieure (2).

5. Moule (1) selon la revendication 3, une couche de pâte étant appliquée à ladite partie sensiblement triangulaire (13) de la seconde couche (10) de ladite paroi latérale (3).

6. Moule (1) selon la revendication 4 ou 5, ladite paroi latérale (3) comprenant un nombre prédéterminé de plis (14), chaque pli (14) comprenant une région de recouvrement (15), chaque région de recouvrement (15) étant constituée par l'orientation réciproquement d'un ou plusieurs secteurs (12) et d'une ou plusieurs parties sensiblement triangulaires (13) au niveau d'une ou plusieurs lignes de rainurage (11) de ladite paroi latérale (3), où en particulier une distance minimale (D) est égale à ladite longueur (L) desdits côtés (5) du périmètre polygonal (4) de ladite paroi inférieure (2), particulièrement ladite distance minimale (D) est définie au niveau dudit périmètre polygonal (4).

7. Moule (1) selon l'une quelconque des revendications précédentes, dans lequel ledit moule (1) du type en une pièce est fabriqué par étirage d'une matrice plate d'un matériau en papier, et lesdits côtés (5) du périmètre polygonal (4) étant définis par une ou plusieurs lignes de rainurage (11).

8. Moule (1) selon l'une quelconque des revendications précédentes, lesdits côtés (5) du périmètre polygonal (4) se développant depuis la même longueur (L), particulièrement ledit périmètre polygonal (4) étant régulier.

9. Moule (1) selon l'une quelconque des revendications précédentes, dans lequel ledit film de matières oléofuges et/ou hydrofuges est à base de polyéthylène, ladite première couche (9) étant lisse, et où ladite seconde couche (10) est gaufrée selon une première série de lignes de gaufrage parallèles l'une à l'autre et selon une seconde série de lignes de gaufrage parallèles l'une à l'autre, ladite première et ladite seconde série de lignes de gaufrage étant réciproquement transversales, particulièrement perpendiculaires.

10. Moule (1) selon la revendication précédente, dans lequel deux secteurs (12) se chevauchent au moins partiellement au niveau de chaque région de recouvrement (15), ladite première et ladite seconde série de lignes de gaufrage de l'un desdits secteurs au moins partiellement en chevauchement (12) étant respectivement parallèles à ladite première et ladite seconde série de lignes de gaufrage de l'autre secteur (12).

11. Moule (1) selon l'une quelconque des revendications précédentes, dans lequel ladite paroi latérale (3) présente une partie d'extrémité supérieure (3a) opposée à la paroi inférieure (2), et ladite paroi latérale (3) est pliée vers ladite cavité (6) au niveau de ladite partie d'extrémité (3a) afin de former un bord de chevauchement (22), ledit bord (22) étant plié vers le bas afin de former un angle sensiblement aigu avec ladite paroi latérale (3) et se développant dans le périmètre par rapport à ladite cavité (6), particulièrement ledit angle sensiblement aigu est inférieur à 25°, encore plus particulièrement où ledit bord (22) se trouve en contact avec ladite surface externe (8) de ladite paroi latérale (3), où en particulier ledit bord (22) est collé et/ou thermiquement scellé à ladite surface externe (8) au niveau de ladite partie d'extrémité (3a).

12. Moule (1) selon l'une quelconque des revendications 1 à 10, dans lequel ladite paroi latérale (3) présente une partie d'extrémité supérieure (3a) opposée à la paroi inférieure (2) et où ladite partie d'extrémité (3a) de ladite paroi latérale (3) est au moins partiellement enroulée sur elle-même afin de former un bord recourbé (22), ledit bord (22) se développant dans le périmètre par rapport à ladite cavité (6), ledit bord (22) étant collé et/ou thermiquement scellé à ladite surface externe (8) au niveau de ladite partie d'extrémité (3a).

13. Moule (1) selon l'une quelconque des revendications précédentes, ledit moule (1) présentant, sous des conditions de fonctionnement, une hauteur (H) d'au moins 3 cm, préférablement d'au moins 7 cm, et encore plus préférablement une hauteur (H) d'au moins 11 cm.

14. Moule (1) selon l'une quelconque des revendications précédentes, ledit moule (1) présentant une distance maximale (A) entre deux vortex non consécutifs, particulièrement opposés, dudit périmètre polygonal (4) non inférieure à 10 cm, particulièrement non inférieure à 15 cm, et préférablement non inférieure à 18 cm.

15. Procédé de cuisson de pâtisseries telles que des panettones et/ou des tartes, comprenant l'étape de fourniture d'un moule (1) selon l'une quelconque des revendications précédentes.
